# EUROPÄISCHE PATENTANMELDUNG

(11) **EP 1 634 741 A2**
(43) Veröffentlichungstag der Anmeldung: **15.03.2006**
(21) Anmeldenummer: 05013176.2
(22) Anmeldetag: 18.06.2005
(51) Int. Cl.: B60J 1/10

(54) **Verfahren zum Herstellen gewölbter Scheiben aus thermoplastischem Material**

(30) Priorität: 31.07.2004 DE 102004037285
(71) Anmelder: Seitz GmbH & Co. KG, 74238 Krautheim (DE)
(72) Erfinder: Almqvist, Anders, 97980 Bad Mergentheim (DE)
(74) Vertreter: Kohler Schmid Möbus

(57) **Zusammenfassung**

Im Laufe eines Verfahrens zum Herstellen gewölbter Scheiben (21) aus thermoplastischem Material für Fenster, Luken, Türen oder dergleichen insbesondere an Wohnwagen, Reisemobilen oder sonstigen Fahrzeugen wird eine Scheibenplatte (22) aus thermoplastischem Material unter Erwärmen erweicht und im erweichten Zustand verformt und dabei mit wenigstens einer Wölbung (24) versehen.

Im erweichten Zustand wird die Scheibenplatte (22) außerdem mit wenigstens einer Scheibenöffnung (26, 31) versehen und/oder an ihrer Randkante (25a) bearbeitet, insbesondere besäumt.

## Beschreibung

Die Erfindung betrifft ein Verfahren zum Herstellen gewölbter Scheiben aus thermoplastischem Material für Fenster, Luken, Türen oder dergleichen insbesondere an Wohnwagen, Reisemobilen oder sonstigen Fahrzeugen, wobei eine Scheibenplatte aus thermoplastischem Material unter Erwärmen erweicht und im erweichten Zustand verformt und dabei mit wenigstens einer Wölbung versehen wird und wobei wenigstens eine Scheibenöffnung erstellt oder die Scheibenplatte an einer Randkante bearbeitet, insbesondere besäumt wird.

Gewölbte Scheiben der genannten Art werden derzeit zum Beispiel als Teile von Doppelscheiben verwendet und sind als solche an ihren Rändern mit einer planen oder einer weiteren gewölbten Scheibe verbunden. Das von der Wölbung der gewölbten Scheibe einerseits und von der zweiten Scheibe andererseits begrenzte Luftvolumen übernimmt eine wärmedämmende Funktion. In die gewölbte Scheibe einzubringende Scheibenöffnungen gestatten beispielsweise einen Druckausgleich zwischen dem Innern der Doppelscheibe und der Fahrzeugumgebung. Aufgrund eines derartigen Druckausgleiches können beispielsweise beim Befahren von Passstraßen im Gebirge durch Luftdruckschwankungen bedingte unerwünschte Verformungen der Doppelscheibe vermieden werden. Durch eine Randkantenbearbeitung erhalten gewölbte Scheiben die gewünschte Randgeometrie. Insbesondere lassen sich die Ränder gewölbter Scheiben durch eine derartige Bearbeitung besäumen.

Bekanntermaßen werden Scheibenöffnungen im Laufe der Scheibenherstellung nach dem Erkalten bzw. Verfestigen der zuvor im erwärmten und erweichten Zustand verformten Scheibe erstellt. Entsprechend wird derzeit bei der Herstellung gewölbter Scheiben mit der Bearbeitung der Randkanten der Scheiben verfahren.

Die bekannten Verfahren zum Herstellen gewölbter Scheiben zu optimieren, hat sich die vorliegende Erfindung zum Ziel gesetzt.

Erfindungsgemäß gelöst wird diese Aufgabe durch das Herstellungsverfahren gemäß Patentanspruch 1 sowie durch das Herstellungsverfahren gemäß Patentanspruch 2.

Im Falle der Erfindung werden demnach die Scheibenplatten im erweichten Zustand mit wenigstens einer Öffnung versehen bzw. an ihren Randkanten bearbeitet, insbesondere besäumt. Diese Vorgehensweise erweist sich in mehrerlei Hinsicht als vorteilhaft. Zum einen bedarf es zur Herstellung der Scheibenöffnungen bzw. zur Bearbeitung der Scheibenrandkanten keines dem erweichten Zustand der Scheibenplatten zeitlich vor- oder nachgeschalteten Arbeitsganges. Die Taktzeiten der Scheibenherstellung lassen sich dadurch minimieren. Darüber hinaus erfolgt die Bearbeitung - sei es das Erstellen von Öffnungen oder die Randkantenbearbeitung - bei einem Zustand der betreffenden Scheibenplatte, bei welchem das Plattenmaterial eine lediglich geringe Festigkeit besitzt und folglich auf einfache Art und Weise bearbeitet werden kann. Insbesondere eine spanende Bearbeitung der Scheibenplatten lässt sich vermeiden. Aufgrund der daraus resultierenden hohen Prozesssicherheit erfindungsgemäßer Verfahren reduziert sich die Gefahr der Fertigung von Ausschuss, wie sie ansonsten beispielsweise aufgrund der Möglichkeit bearbeitungsbedingter Rissbildung in dem Scheibenplattenmaterial besteht.

Bevorzugte Varianten der erfindungsgemäßen Verfahren nach den Patentansprüchen 1 und 2 ergeben sich aus den abhängigen Patentansprüchen 3 bis 8.

Gemäß Patentanspruch 3 werden in bevorzugter Ausgestaltung der Erfindung Scheibenplatten im erweichten Zustand sowohl mit wenigstens einer Öffnung versehen als auch an ihren Randkanten bearbeitet, insbesondere besäumt.

Ausweislich der Patentansprüche 4 bis 6 lässt sich der Zeitpunkt, zu welchem die erweichten Scheibenplatten mit Öffnungen versehen und/oder an ihren Randkanten bearbeitet werden, im Falle der Erfindung variabel wählen. Für eine Bearbeitung der erweichten Scheibenplatten vor dem Verformen (Patentanspruch 4) spricht der Umstand, dass die Scheibenplatten zu diesem Zeitpunkt in aller Regel eine ebene Form besitzen und folglich besonders einfach zur Bearbeitung gelagert werden können. Eine zeitliche Parallelisierung des Verformungsvorganges einerseits und des Erstellens von Scheibenöffnungen bzw. der Bearbeitung der Scheibenrandkanten andererseits (Patentanspruch 5) empfiehlt sich insofern, als in diesem Fall Maßnahmen, die zum Verformen der erweichten Scheibenplatten getroffen werden müssen, gleichzeitig zur Bearbeitung der Scheibenplatten genutzt werden können. Beispielsweise lassen sich Bewegungen zur Plattenverformung mit Bewegungen zum Erstellen von Scheibenöffnungen bzw. zur Bearbeitung der Randkanten der Scheibenplatten koppeln und dann insbesondere auch mittels ein und derselben Antriebseinrichtung ausführen. Ein Erstellen von Scheibenöffnungen bzw. eine Bearbeitung von Randkanten im Anschluss an den Verformungsvorgang (Patentanspruch 6) schließlich ist vor dem Hintergrund sinnvoll, dass dann die Scheibenplatte zumindest annähernd ihre endgültige Gestalt besitzt und infolgedessen sichergestellt ist, dass die Bearbeitung tatsächlich an den richtigen Stellen durchgeführt wird. Insbesondere kann die erweichte und bereits verformte Scheibenplatte beim Erstellen von Scheibenöffnungen bzw. beim Bearbeiten von Randkanten in oder auf der für die Verformung verwendeten Form verbleiben.

Die Patentansprüche 7 und 8 beschreiben erfindungsgemäß bevorzugte Möglichkeiten zur Erstellung der gewünschten Scheibenöffnungen an den erweichten Scheibenplatten.

Nachstehend wird die Erfindung anhand beispielhafter schematischer Darstellungen näher erläutert. Es zeigen:
- Fig. 1: den Ablauf einer ersten Variante eines Verfahrens zum Herstellen gewölbter Scheiben aus thermoplastischem Material,
- Fig. 2: den Ablauf einer zweiten Variante eines Verfahrens zum Herstellen gewölbter Scheiben aus thermoplastischem Material,
- Fig. 3: den Ablauf einer dritten Variante eines Verfahrens zum Herstellen gewölbter Scheiben aus thermoplastischem Material und
- Fig. 4: eine nach dem Verfahren gemäß Fig. 3 gefertigte gewölbte Scheibe als Teil einer Doppelscheibe.

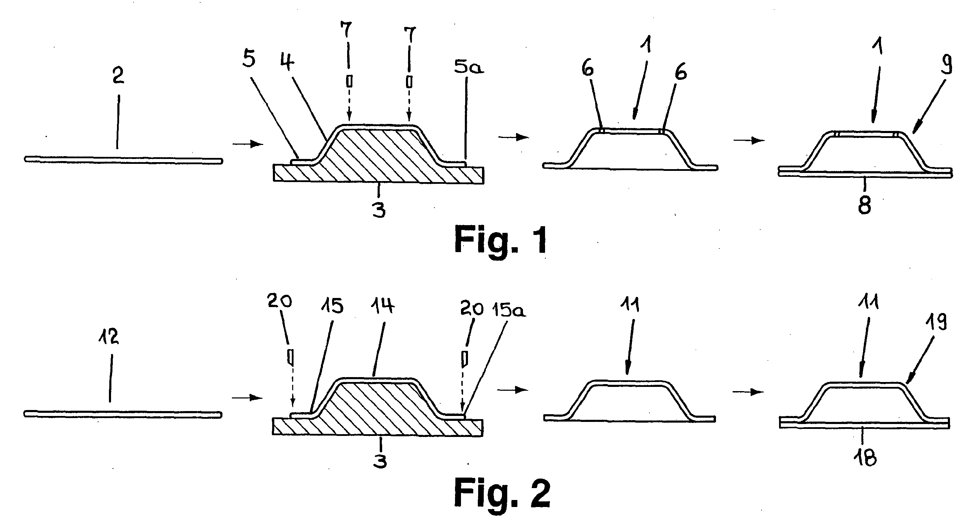

Ausweislich Fig. 1 dient als Ausgangsmaterial für die Herstellung einer gewölbten Scheibe 1 eine ebene Scheibenplatte 2. Die Scheibenplatte 2 besteht im gezeigten Beispielsfall aus PMMA und wurde zuvor auf Maß zugeschnitten. Anstelle von PMMA kommen als Plattenmaterial eine Vielzahl weiterer thermoplastischer Kunststoffe in Frage wie etwa PC, SAN, PET, PVC, PP.

Mit Umgebungstemperatur wird die Scheibenplatte 2 einer nicht gezeigten Heizvorrichtung zugeführt und dort unter Erwärmen erweicht. Im erwärmten Zustand wird die Scheibenplatte 2 auf eine Form 3 aufgedrückt. Dadurch ergeben sich an der erweichten Scheibenplatte 2 eine Wölbung 4 sowie ein Rand 5 mit einer Randkante 5a.

Nach dem Verformen aber bei nach wie vor erweichtem Zustand der weiterhin auf der Form 3 aufliegenden Scheibenplatte 2 werden in deren Wölbung 4 insgesamt vier,Scheibenöffnungen 6 eingebracht, von denen in Fig. 1 zwei Scheibenöffnungen 6 zu erkennen sind. Zu diesem Zweck vorgesehen sind vier Stanzstempel 7, von denen in den Abbildungen zwei Stanzstempel 7 andeutungsweise dargestellt sind. Die Stanzstempel 7 werden in das weiche Material der Scheibenplatte 2 eingedrückt. Die Form 3 dient bei der stanzenden Bearbeitung der Scheibenplatte 2 als Widerlager. Sie ist mit nicht gezeigten Aufnahmen versehen, in welche die Stanzstempel 7 beim Durchdringen der erweichten Scheibenplatte 2 einlaufen können.

Nach dem Erstellen der Scheibenöffnungen 6 verbleibt die Scheibenplatte 2 zunächst auf der Form 3, ehe sie nach dem Erkalten verfestigt ist und von der Form 3 abgenommen werden kann. Abschließend wird die mit den Scheibenöffnungen 6 versehene gewölbte Scheibe 1 mit einer planen Scheibe 8 zu einer Doppelscheibe 9 verklebt. Dabei in das Scheibeninnere gelangende Klebstoffdämpfe können über die Scheibenöffnungen 6 entweichen. Darüber hinaus ermöglichen die Scheibenöffnungen 6 an der Doppelscheibe 9 einen Druckausgleich zwischen dem Scheibeninnern und der Umgebung.

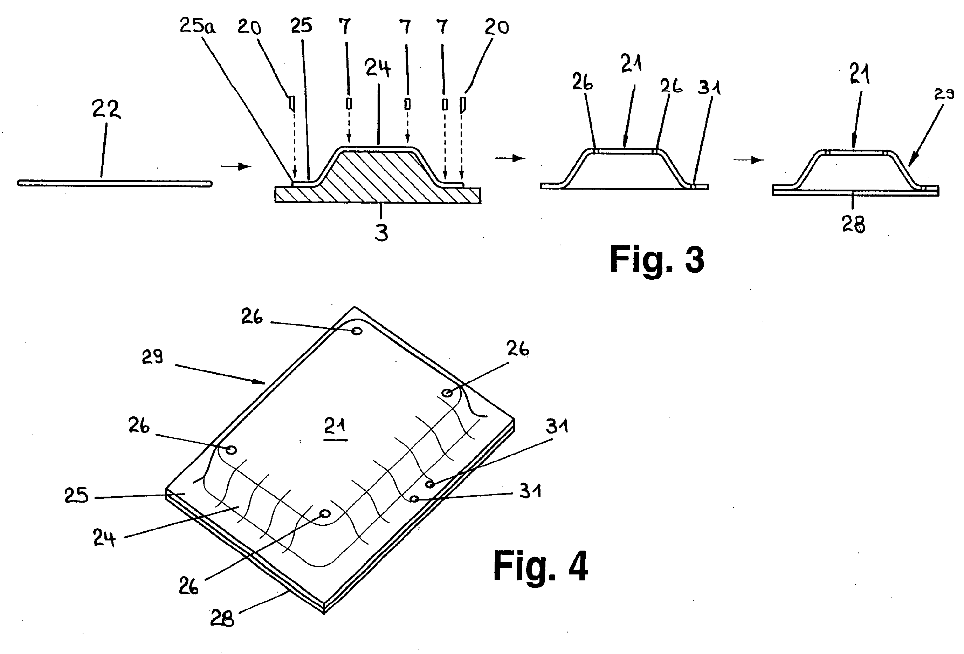

Die in den Fign. 2 und 3 veranschaulichten Verfahrensabläufe stimmen in weiten Teilen mit dem Verfahrensablauf gemäß Fig. 1 überein.

Im Falle des Verfahrens nach Fig. 2 wird allerdings eine Scheibenplatte 12 einer gewölbten Scheibe 11 nicht an einer Wölbung 14 mit Scheibenöffnungen versehen sondern vielmehr an einer Randkante 15a eines Randes 15 besäumt, im gezeigten Beispielsfalls begradigt. Auch die Bearbeitung der Randkante 15a erfolgt bei erweichtem Zustand der Scheibenplatte 12 und bei Anordnung der Scheibenplatte 12 auf der Form 3. Ein Messer 20 wird zu diesem Zweck mit seinen Schneidkanten in das erweichte Material der Scheibenplatte 12 eingedrückt. Die Schneidkante des Messers 20 erstreckt sich über die gesamte rechteckig verlaufende Randkante 15a der verformten Scheibenplatte 12.

Auch beim Besäumen der Randkante 15a dient die Form 3 als Widerlager. Nach dem Erkalten und Verfestigen wird die gewölbte Scheibe 11 von der Form 3 abgenommen und mit einer planen Scheibe 18 zu einer Doppelscheibe 19 zusammengefügt.

Ausweislich Fig. 3 wird eine zunächst feste und ebene Scheibenplatte 22 nach dem Erweichen und nach dem sich daran anschließenden Verformen an einer Wölbung 24 mit Scheibenöffnungen 26 und an einem Rand 25 mit Scheibenöffnungen 31 versehen. Außerdem wird eine Randkante 25a besäumt bzw. begradigt. Zum Erstellen der Scheibenöffnungen 26, 31 dienen Stanzstempel 7; das Besäumen der Randkante 25a erfolgt mittels eines Messers 20. Für jeden der Stanzstempel 7 ist an der Form 3 eine Aufnahme vorgesehen, in welche der jeweilige Stanzstempel 7 beim Durchdringen der Scheibenplatte 22 einlaufen kann.

Sowohl das Einbringen der Scheibenöffnungen 26, 31 als auch das Besäumen der Randkante 25a erfolgt bei erweichter und nach wie vor auf bzw. in der Form 3 angeordneter Scheibenplatte 22. Nach dem Erkalten und Verfestigen wird die dann vorliegende gewölbte Scheibe 21 von der Form 3 abgenommen und mit einer planen Scheibe 28 zu einer Doppelscheibe 29 verklebt. Dabei entstehende Klebstoffdämpfe können durch die Scheibenöffnungen 26 aus dem Innern der Doppelscheibe 29 entweichen. Darüber hinaus dienen auch die Scheibenöffnungen 26 zum Druckausgleich zwischen dem Scheibeninnern und der Umgebung. Die insbesondere in Fig. 4 zu erkennenden Scheibenöffnungen 31 sind als Befestigungsöffnungen für einen an der Doppelscheibe 29 zu einem späteren Zeitpunkt anzubringenden Handgriff vorgesehen.

Eine Modifizierung der vorstehend beschriebenen Verfahrensschritte ist möglich. So kann etwa anstelle der Form 3 Druckluft zur Verformung der Scheibenplatten 2, 12, 22 genutzt werden. Zum Einbringen der Scheibenöffnungen 6, 26, 31 lassen sich anstelle der Stanzstempel 7 beispielsweise drehende Werkzeuge, insbesondere Bohrer, verwenden. Auch der Zeitpunkt der Bearbeitung der Scheibenplatten 2, 12, 22 ist variabel wählbar. So lassen sich Scheibenöffnungen 6, 26, 31 auch vor oder gleichzeitig mit dem Verformen der Scheibenplatten 2, 12, 22 einbringen. Entsprechendes gilt für die schneidende Bearbeitung der Randkanten 5a, 15a, 25a der Scheibenplatten 2, 12, 22. Ausschlaggebend ist allein, dass die Bearbeitung bei erweichtem Zustand der Scheibenplatten 2, 12, 22 vorgenommen wird. Schließlich sind auch von den dargestellten Verhältnissen abweichende Anordnungen und Zweckbestimmungen erstellter Scheibenöffnungen denkbar.

## Patentansprüche

1. Verfahren zum Herstellen gewölbter Scheiben (1, 21) aus thermoplastischem Material für Fenster, Luken, Türen oder dergleichen insbesondere an Wohnwagen, Reisemobilen oder sonstigen Fahrzeugen, wobei eine Scheibenplatte (2, 22) aus thermoplastischem Material unter Erwärmen erweicht und im erweichten Zustand verformt und dabei mit wenigstens einer Wölbung (4, 24) versehen wird und wobei wenigstens eine Scheibenöffnung (6, 26, 31) erstellt wird, **dadurch gekennzeichnet, dass** wenigstens eine Scheibenöffnung (6, 26, 31) bei erweichtem Zustand der Scheibenplatte (2, 22) erstellt wird.

2. Verfahren zum Herstellen von gewölbten Scheiben (11, 21) aus thermoplastischem Material für Fenster, Luken, Türen oder dergleichen insbesondere an Wohnwagen, Reisemobilen oder sonstigen Fahrzeugen, wobei eine Scheibenplatte (12, 22) aus thermoplastischem Material unter Erwärmen erweicht und im erweichten Zustand verformt und dabei mit wenigstens einer Wölbung (14, 24) versehen wird und wobei die Scheibenplatte (12, 22) an einer Randkante (15a, 25a) bearbeitet, insbesondere besäumt wird, **dadurch gekennzeichnet, dass** die Scheibenplatte (12, 22) im erweichten Zustand an ihrer Randkante (15a, 25a) bearbeitet, insbesondere besäumt wird.

3. Verfahren nach Anspruch 2, **dadurch gekennzeichnet, dass** bei erweichtem Zustand der Scheibenplatte (22) wenigstens eine Scheibenöffnung (26, 31) erstellt wird.

4. Verfahren nach wenigstens einem der vorhergehenden Ansprüche, **dadurch gekennzeichnet, dass** die Scheibenplatte (2, 12, 22) im erweichten Zustand vor dem Verformen mit wenigstens einer Scheibenöffnung (6, 26, 31) versehen und/oder an ihrer Randkante (5a, 15a, 25a) bearbeitet, insbesondere besäumt wird.

5. Verfahren nach wenigstens einem der vorhergehenden Ansprüche, **dadurch gekennzeichnet, dass** die Scheibenplatte (2, 12, 22) im erweichten Zustand beim Verformen mit wenigstens einer Scheibenöffnung (6, 26, 31) versehen und/oder an ihrer Randkante (5a, 15a, 25a) bearbeitet, insbesondere besäumt wird.

6. Verfahren nach wenigstens einem der vorhergehenden Ansprüche, **dadurch gekennzeichnet, dass** die Scheibenplatte (2, 12, 22) im erweichten Zustand nach dem Verformen mit wenigstens einer Scheibenöffnung (6, 26, 31) versehen und/oder an ihrer Randkante (5a, 15a, 25a) bearbeitet, insbesondere besäumt wird.

7. Verfahren nach wenigstens einem der vorhergehenden Ansprüche, **dadurch gekennzeichnet, dass** die Scheibenplatte (2, 22) im erweichten Zustand unter stanzender Bearbeitung mit wenigstens einer Scheibenöffnung (6, 26, 31) versehen wird.

8. Verfahren nach wenigstens einem der vorhergehenden Ansprüche, **dadurch gekennzeichnet, dass** die Scheibenplatte (2, 22) im erweichten Zustand unter drehender Bearbeitung mit wenigstens einer Scheibenöffnung (6, 26, 31) versehen wird.
